# EUROPEAN PATENT APPLICATION

(11) **EP 1 761 049 A2**
(43) Date of publication of application: **07.03.2007**
(21) Application number: 06016698.0
(22) Date of filing: 10.08.2006
(51) Int. Cl.: H04N 5/445, G06F 3/033

(54) **Method and apparatus for constructing dynamic menu for user interface**

(30) Priority: 30.08.2005 KR 20050080333
(71) Applicant: Samsung Electronics Co., Ltd., Suwon-si, Gyeonggi-Do (KR)
(72) Inventor: Lee, Si-Hyoung, Dongan-gu Anyang-si Gyeonggi-do (KR); Park, Nam-Choon, Banghwa-dong Gangseo-gu Seoul (KR); Kang, Jung-Won, Yangcheon-gu Seoul (KR); Park, Yi-Sak, Dangsan-dong 5-ga Yeongdeungpo-gu Seoul (KR); Kim, Ji-Hoon, Gangnam-gu Seoul (KR); Shin, So-Young, Hanam-si Gyeonggi-do (KR)
(74) Representative: Lang, Johannes

(57) **Abstract**

A method and apparatus for constructing a dynamic menu for a user interface are provided. An application-related map is prepared on the basis of all executable applications. All applications connected with a currently running application are searched for on the application-related map at the request of a user to construct and display the dynamic menu. Thereby, a user-oriented interface is realized.

## Description

### BACKGROUND OF THE INVENTION

### Field of the Invention

The present invention relates to a method and apparatus for constructing a dynamic menu for a user interface, and more particularly, a method and apparatus for constructing a dynamic menu for a user interface, in which the user interface focuses on interaction between a user and an application used by the user

### Description of the Related Art

A set-top box is a control box capable of broadcast reception and various supplementary functions, and has also be referred to as a digital broadcast receiver. The set-top box has served mainly to receive broadcast data from a particular broadcaster until digital broadcasting is fully underway. However, in keeping up with the accelerating pace of digital conversion, the set-top box is currently being developed to perform various supplementary functions such as a communication function, an individual image storage function, an electronic program guide function, etc., in addition to broadcast reception.

Meanwhile, the Internet enables users of personal computers to access bidirectional services such as online games and shopping. Recently, multimedia providers such as BBCi (BBC on-line) have been using a method of grafting Internet technology onto TVs. With this technology, traffic exchanged between the provider and subscriber may be divided into three categories: audio, data, and video. Services supporting all three kinds of traffic are called triple play services.

We are now at a time when triple play services are being applied to set-top boxes, transforming them into high-powered home gateways. Such a home gateway is generally designed to independently carry out main functions such as TV (Electronic Program Guide (EPG), Personal Video Recorder (PVR), etc.), communication (videophone, e-mail, etc.), entertainment (photographs, movies, music, etc.), networking (Internet, contents sharing, etc.), and so on. Further, the home gateway generally has a menu system adapted to classify and stratify functions of applications, construct a steady menu according to the functions, and enable a user to select items from the constructed menu.

In this menu system, when intending to make a videophone call while watching TV, or when intending to execute the EPG during a videophone call, for example, the user must inconveniently terminate the active application to go back and search through a main menu to find and execute the new application. Further, when performing a complicated function, the user often does not know what tasks he/she can or should perform without the assistance of instructions or a map of all available functions. In such situations, the user can easily become confused and select the wrong function or mistakenly perform an unwanted operation.

Thus, the system-oriented user interface where the user must search for a desired menu item according to a preset menu system becomes inconvenient when a variety of applications with numerous functions are provided. Accordingly, there has arisen a need for an interface that takes into consideration how the user makes use of the application

### SUMMARY OF THE INVENTION

It is an objective of the present invention to provide a method and apparatus for constructing a dynamic menu for a user interface capable of selecting and providing only necessary applications according to the work situation of a user.

According to an aspect of the present invention, there is provided a method for constructing a dynamic menu for a user interface. The method comprises the steps of: preparing an application-related map on the basis of all executable applications; and searching for all applications connected with a currently running application on the application-related map at the request of a user, and constructing and displaying the dynamic menu.

The application-related map may be prepared by detecting a network connection and connected hardware, and detecting applications that are executable on the connected network or hardware.

The dynamic menu may be constructed of at least one application that is likely to be run on top of the currently running application, and options of the dynamic menu may be arranged in order of use frequency of corresponding executable applications.

The method may further comprise a step of, when the currently running application is changed by the user, detecting executable applications on the basis of the changed application, and constructing and displaying the dynamic menu.

According to another aspect of the present invention, there is provided an apparatus for constructing a dynamic menu for a user interface. The apparatus comprises: a connection sensor for sensing a network connection and connected hardware; and a controller for preparing an application-related map on the basis of all executable applications, searching for all applications connected with a currently running application on the application-related map at the request of a user, and constructing the dynamic menu.

The controller may construct the dynamic menu of at least one application that is likely to be run on top of the currently running application.

Further, options of the dynamic menu may be arranged in order of use frequency of corresponding executable applications.

The apparatus may further comprise a displayer for receiving and displaying the dynamic menu from the controller, and a command receiver for receiving a request to construct the dynamic menu from the user and transmitting the received request to the controller.

The command receiver may notify the controller of change of the currently running application when the user executes a new application through the provided dynamic menu.

The controller may re-search for connected, executable applications on the application-related map on the basis of the new application, when notified through the command receiver that the new application is selected by the user.

According to still another aspect of the present invention, there is provided a set-top box which is connected with an external network and at least one hardware device to perform a combination of functions. The set-top box comprises a user interface for preparing an application-related map on the basis of all executable applications, searching for all applications connected with a currently running application on the application-related map at the request of a user, and constructing and displaying the dynamic menu.

The hardware may include at least one of a digital versatile disc player, a personal video recorder, a digital camera, a personal computer, an internal storage, and an external storage.

The dynamic menu may be constructed of at least one application that is likely to be run on top of the currently running application.

In addition, options of the dynamic menu may be arranged in order of use frequency of corresponding executable applications.

According to yet another aspect of the present invention, there is provided a mobile terminal which comprises a user interface for preparing an application-related map on the basis of all executable applications, searching for all applications connected with a currently running application on the application-related map at the request of a user, and constructing and displaying the dynamic menu.

### BRIEF DESCRIPTION OF THE DRAWINGS

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram showing external devices connected with a set-top box according to the present invention;
FIG. 2 is a block diagram showing components involved in constructing a dynamic menu in a set-top box according to the present invention;
FIG. 3 is a flowchart showing a procedure of constructing a dynamic menu for a user interface according to the present invention;
FIG. 4 shows a structure of an application-related map according to an exemplary embodiment of the present invention;
FIG. 5 shows a dynamic menu construction according to an exemplary embodiment of the present invention; and
FIG. 6 shows a dynamic menu construction according to another exemplary embodiment of the present invention.

### DETAILED DESCRIPTION OF EXEMPLARY EMBODIMENTS

Hereinafter, the present invention will be described in more detail with reference to the accompanying drawings, in which exemplary embodiments of the invention are shown. For the clarity and to enable a clear understanding conciseness of the present invention this disclosure, related technology that is well known to those of ordinary skill in the art to which the present invention pertains, will not be described in detail.

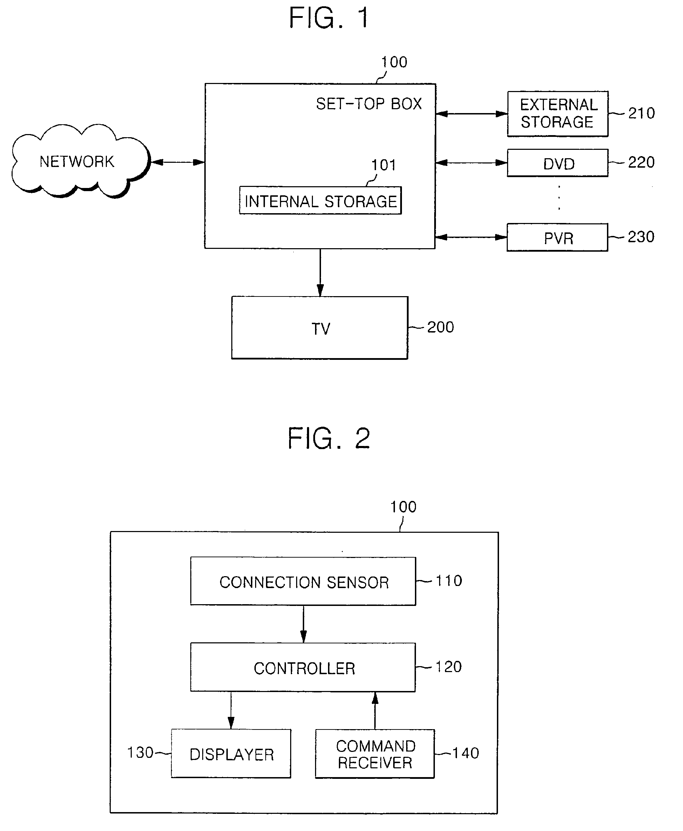

FIG. 1 is a block diagram showing external devices connected with a set-top box according to the present invention.

A set-top box 100 of FIG. 1 is connected with an external network, an external storage 210, a digital versatile disc (DVD) 220, a personal video recorder (PVR) 230, and a TV 200, and includes an internal storage 101.

The set-top box 100 not only receive broadcasts but performs several functions such as TV, communication, entertainment, networking, etc. Therefore, the set-top box 100 may be connected with various external devices such as a digital camera, a personal computer, etc., other than the external devices shown in FIG. 1, and can perform various functions according to the connected external device.

The set-top box 100 is connected with the external network, external storage 210, DVD 220, PVR 230, etc. to perform various functions.

For example, the set-top box 100 is connected with a TCP/IP (Transmission Control Protocol/Internet Protocol) network, thereby accessing the Internet or performing videophone calls, etc. using VoIP (Voice over IP), and enabling web surfing and e-mail. Further, the set-top box can store received e-mail in the internal storage 101 and then forward it to a person on the other end of a videophone call.

In addition, the set-top box 100 is connected with the DVD 220, PVR 230, etc. to watch movies, or with the external storage 210 to check photographs, documents, etc. stored in the external storage 210. Here, the DVD or PVR is used mainly for recording and reproducing motion pictures. The PVR is a personal digital video recorder for recording/reproducing information on/from a hard disc, which is different from a VCR (Video Cassette Recorder) for recording/reproducing audio-video signals on/from magnetic tape.

The set-top box 100 displays various functions to the user in the form of a menu on the TV 200, and the user chooses and executes a desired application from the menu by using a remote controller, etc.

FIG. 2 is a block diagram showing internal components involved in constructing a dynamic menu in a set-top box according to the present invention.

The set-top box 100 includes a connection sensor 110, a controller 120, a displayer 130, and a command receiver 140.

The connection sensor 110 detects all hardware connected with the set-top box 100. Here, hardware refers to external devices located outside the set-top box 100 as well as internal recorders located inside the set-top box 100. The connection sensor 110 detects the hardware connected with the set-top box 100, determines a network connection status, and reports the results to the controller 120. Such a report may be made each time a connection is made or removed and/or at regular time intervals.

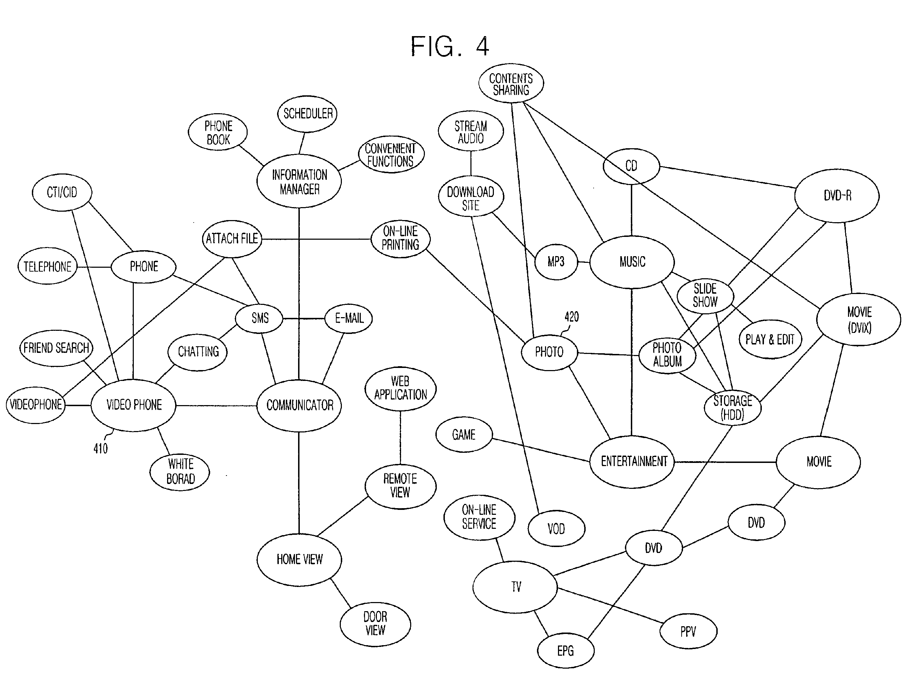

The controller 120, that receives the reports on hardware connected with the set-top box 100 and network connection status from the connection sensor 110, detects applications executable on the connected hardware and the accessed network to prepare an application-related map. Here, the application-related map shows interconnections of various applications executable on each piece of hardware and will be described in detail with reference to FIG. 4.

The controller 120 detects a location of a currently running application on the prepared application-related map and searches for all applications connected with the currently running application, thereby preparing a connectable application list.

Here, there may be too many applications that are connectable with the currently running application to list. In this case, a method of determining which applications are most likely to be run after or simultaneously with currently running applications and then providing them as a menu to the user may be used. Alternatively, a method of recording an execution history of the user's applications, listing applications in order of use frequency with the most frequently used application at the top, and then providing the list to the user as a menu may be used.

The controller 120 transmits the prepared connectable application list to the displayer 130.

The displayer 130 receiving the connectable application list from the controller 120 displays the connectable application list on a TV screen in a menu format.

The user chooses a desired one of the applications provided in the menu format. The command receiver 140 of the set-top box 100 receives various commands from the user and transmits them to the controller 120.

The set-top box 100 shown in FIG. 2 merely exemplifies one embodiment of the user interface providing the dynamic menu according to the present invention. In alternative embodiments the user interface providing the dynamic menu according to the present invention may be applied to devices other than the set-top box. As an example, the user interface providing the dynamic menu may be applied to a mobile communication terminal or a personal computer.

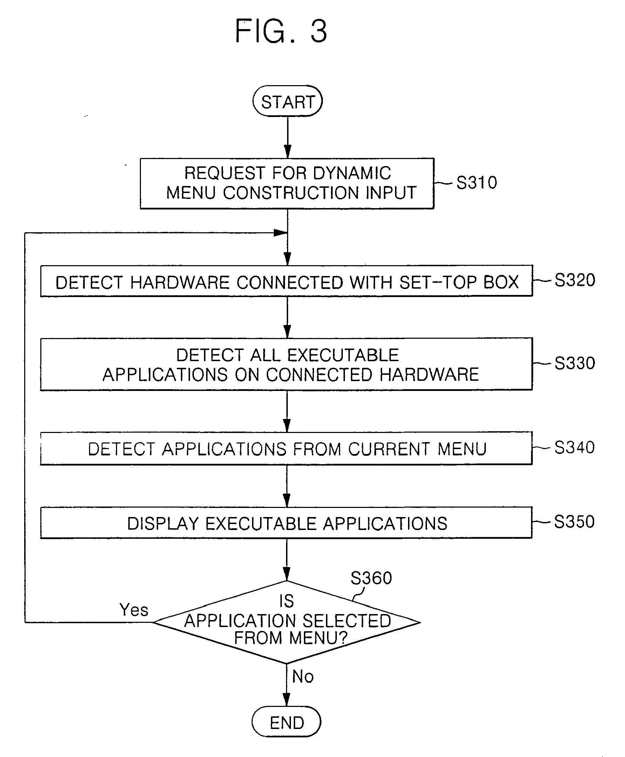

FIG. 3 shows a procedure of constructing a dynamic menu for a user interface according to the present invention.

When a user requests the present device (set-top box, mobile communication terminal, personal computer, or the like) to construct a dynamic menu (S310), the present device detects all hardware connected directly thereto and by way of a network connection (S320). When the connected hardware and the network connection are detected, the device detects applications (S330) that can be executed on the connected hardware and the network to then prepare an application-related map. Here, all the applications connected with the currently running application are detected on the prepared application-related map (S340), and a menu for all the applications connected with the currently running application is constructed and displayed (S350).

When the user chooses a desired application from the displayed application menu (S360), the device detects the connected hardware and the network connection (S320), and then re-searches for and displays executable applications (S330, S340 and S350). Here, as shown in FIG. 3, rather than re-performing all steps subsequent to and including the step of searching for connected hardware and the network connection, the device may be configured to perform only the step of searching for applications that are executable on top of the currently running application using the previously prepared application-related map. This optional configuration can be determined by a system manager in consideration of load and performance of the system.

FIG. 4 shows a structure of an application-related map according to an exemplary embodiment of the present invention.

An application-related map of FIG. 4 shows arrangement of applications executable on all hardware connected with a control box such as a set-top box and connection between the respective applications. It can be seen from FIG. 4 that the upper executable applications include applications for music, TV, movies, videophone, and so on.

For example, applications executable during operation of a video phone 410 include " Friend Search", "Videophone", "Telephone (Phone)", "Chatting", "White Board" and so on. Further, an upper executable application photo 420 is connected with applications such as "On-line Printing", "Contents Sharing", "Photo Album", etc. When any user chooses "Photo Album" during operation of photo 420, applications such as "Slide Show", "Storage", etc. can be run.

As described, whichever menu option the user moves to through the application-related map of FIG. 4, connectable applications that are executable can be easily viewed. It is also possible for the application-related map to be displayed at the user's request. Thereby, current network connection status, connected hardware, and executable applications may be detected at once.

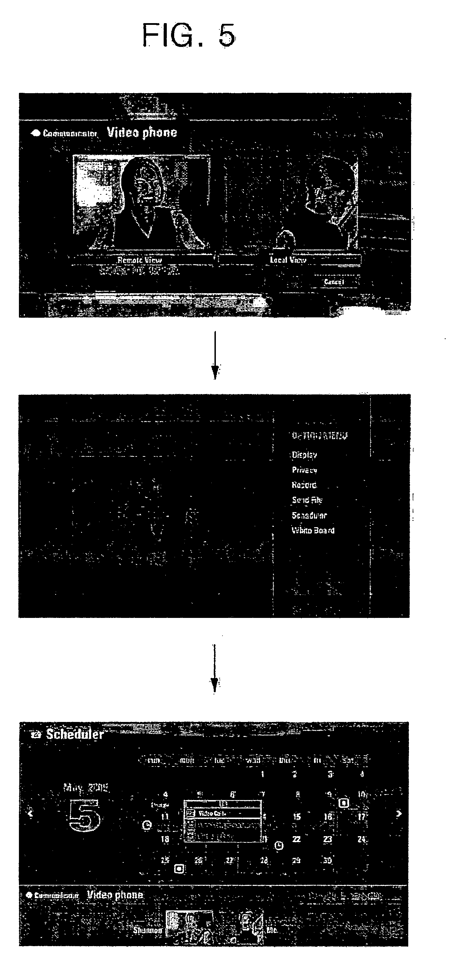

FIG. 5 shows an exemplary embodiment of a dynamic menu construction according to the present invention.

In FIG. 5, it is assumed that a user initiates a scheduler during a video phone call with the intention of performing EPG (electronic program guide) reservation recording.

The user chooses a button (not shown) for dynamic menu construction (hereinafter, referred to as an "option button") on a remote controller (not shown) while using the video phone through a TV screen provided by a set-top box. The set-top box receiving a command of the user detects a position of the current application, "Video phone" 410, from a previously prepared application-related map. When the position of the option "Video phone" 410 is detected, it is possible to easily search for executable applications connected with the option via the application-related map. The set-top box may display all executable applications or a selected number that are frequently run.

The set-top box displays the detected executable applications on the screen in an overlapping fashion. An option menu shown in FIG. 5 includes, in this example, executable applications "Display", "Privacy", "Record", "Send File", "Scheduler" and "White Board". It can be seen which option is frequently executed while using the videophone, and the application options may be arranged in order of use frequency if so preferred. In other words, a favorites list is prepared based on application use frequency and then corresponding menu options are ordered accordingly with the most frequently used option located at the top of the menu.

When the user chooses the Scheduler option from among the menu options presented by the set-top box using a directional key, a window for the scheduler becomes a main window.

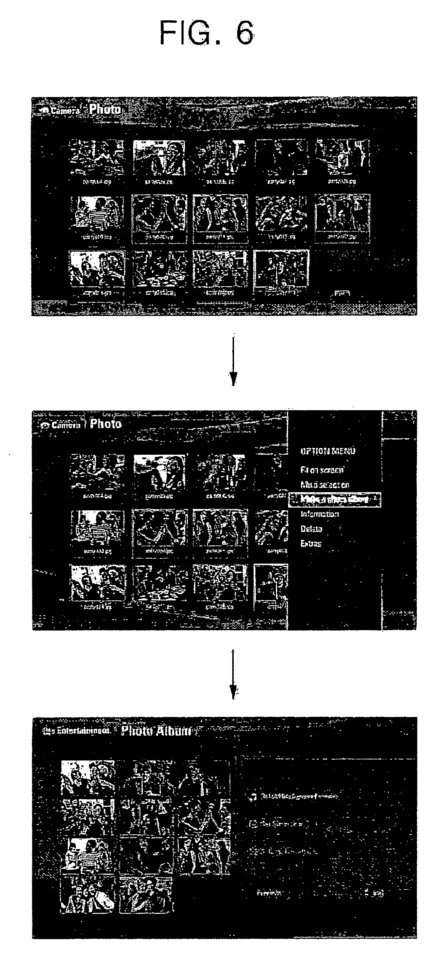

FIG. 6 shows another exemplary embodiment of a dynamic menu construction according to the present invention.

FIG. 6 shows an example where a user intends to generate a photo album using photographs downloaded from a digital camera.

When the user chooses the option button while viewing a plurality of photographs as shown in FIG. 6, a menu of currently executable applications is displayed. In the case shown in FIG. 6, options of the menu include "Fit on Screen", "Multi Selection", "Make a Photo Album", "Information", "Delete", and "Extras". The user can choose the option "Make a Photo Album" using a directional key, etc.

FIG. 6 shows that the user can choose a photo album as well as background music. A completed photo album is stored in the storage within the set-top box. The stored photo album may be used in the future, or transmitted to others through a connected network by e-mail. Although not shown in FIG. 6, in the step of completing the photo album, "Storage", "External Storage", "Attaching to E-mail", "File Transmission", etc., which are applications executable at present or in the future, may be included in the dynamic menu.

In both FIGS. 5 and 6, the user chooses the same option buttons but the menus displayed by the set-top box are different. The set-top box detects the applications capable of running on top of the currently running application, and then arranges previously selected applications or frequently used applications and in the menu and displays the menu for the user.

The present invention allows all possible variations of the menu of options executable in the current situation when the user chooses the button for the dynamic menu construction, even while performing another function. The user may select a function such as edit, move, cancel, or the like in a running application, or move to another application regardless of the running application. In this process, it is not necessary to return to the main menu but simply to select from various applications presented by the dynamic menu.

As described, the present invention provides a user-oriented dynamic menu that selects and displays appropriate options in consideration of the current situation.

According to the present invention, the trouble of going back to the main menu and re-selecting an application while running a different application is eliminated by reducing the steps required to select a new application. Further, the dynamic menu alleviates the need to consult a manual or seek other assistance when performing a complicated task by automatically providing appropriate options.

While exemplary embodiments of the present invention have been described, it will be understood by those skilled in the art that the present invention should not be limited to the described exemplary embodiments. Rather, various changes and modifications can be made within the spirit and scope of the present invention, as defined by the following claims.

## Claims

1. A method for constructing a dynamic menu for a user interface, the method comprising the steps of:
preparing an application-related map on the basis of all executable applications; and
searching for all applications connected with a currently running application on the application-related map at the request of a user, and constructing and displaying the dynamic menu.

2. The method of claim 1, wherein the application-related map is prepared by detecting a network connection, connected hardware, and applications that can be run on the connected network or hardware.

3. The method of claim 1, wherein the dynamic menu is constructed of at least one application that is likely to be run on top of the currently running application.

4. The method of claim 1, wherein options of the dynamic menu are arranged in order of use frequency of corresponding executable applications.

5. The method of claim 1, further comprising a step of, when the currently running application is changed by the user, detecting executable applications on the basis of the changed application, and constructing and displaying the dynamic menu.

6. An apparatus for constructing a dynamic menu for a user interface, comprising:
a connection sensor for sensing a network connection and connected hardware; and
a controller for preparing an application-related map on the basis of all executable applications, searching for all applications connected with a currently running application on the application-related map at the request of a user, and constructing the dynamic menu.

7. The apparatus of claim 6, wherein the application-related map is prepared by detecting network connection and hardware connection, and detecting the executable applications on the connected network or hardware.

8. The apparatus of claim 6, wherein the controller constructs the dynamic menu of at least one application that is likely to be run on top of the currently running application.

9. The apparatus of claim 6, wherein options of the dynamic menu are arranged in order of use frequency of corresponding executable applications.

10. The apparatus of claim 6, further comprising a displayer for receiving and displaying the dynamic menu from the controller.

11. The apparatus of claim 6, further comprising a command receiver for receiving a request to construct the dynamic menu from the user and transmitting the received request to the controller.

12. The apparatus of claim 11, wherein the command receiver notifies the controller of a change of the currently running application when the user executes a new application through the provided dynamic menu.

13. The apparatus of claim 12, wherein the controller re-searches for connected, executable applications on the application-related map on the basis of the new application, when notified through the command receiver that the new application is selected by the user.

14. A set-top box which is connected with an external network and at least one hardware device to perform a combination of functions, the set-top box comprising a user interface for preparing an application-related map on the basis of all executable applications, searching for all applications connected with a currently running application on the application-related map at the request of a user, and constructing and displaying the dynamic menu.

15. The set-top box of claim 14, wherein the hardware device includes at least one of a digital versatile disc player, a personal video recorder, a digital camera, a personal computer, an internal storage, and an external storage.

16. The set-top box of claim 14, wherein the dynamic menu is constructed of at least one application that is likely to be run on top of the currently running application.

17. The set-top box of claim 14, wherein options of the dynamic menu are arranged in order of use frequency of corresponding executable applications.

18. A mobile terminal comprising a user interface for preparing an application-related map on the basis of all executable applications, searching for all applications connected with a currently running application on the application-related map at the request of a user, and constructing and displaying the dynamic menu.
